# EUROPÄISCHE PATENTANMELDUNG

(11) **EP 3 222 561 A1**
(43) Veröffentlichungstag der Anmeldung: **27.09.2017**
(21) Anmeldenummer: 17161431.6
(22) Anmeldetag: 16.03.2017
(51) Int. Cl.: B65F 1/14

(54) **VORRICHTUNG ZUR BEFESTIGUNG EINES FLEXIBLEN MÜLLAUFNAHMEBEHÄLTERS IN EINEM FLUGZEUG-TROLLEY**

(30) Priorität: 24.03.2016 DE 202016101649 U
(71) Anmelder: Spiriant GmbH, 63263 Neu-Isenburg (DE)
(72) Erfinder: Fröschle, Joachim, 64625 Bensheim (DE); Wiesler, Lukas, 63065 Offenbach am Main (DE); Denig, Christoph, 61197 Florstadt (DE)
(74) Vertreter: Geitz Truckenmüller Lucht Christ

(57) **Zusammenfassung**

Eine Vorrichtung zur Befestigung eines flexiblen Müllaufnahmebehälters in einem Flugzeug-Trolley (12), umfassend einen Müllbeutel (21) verbunden mit einem Rahmenelement, wobei dieses Rahmenelement derart bemessen ist, dass es auf den inwändig angeordneten seitlichen Führungsleisten einer Tablettaufnahme in einem Flugzeug-Trolley (12), aufgelagert werden kann, sodass anschließend der Rahmen (1) und der Müllbeutel (21) vollständig in dem Flugzeug-Trolley (12) aufgenommen sind, weiter umfassend einen hinteren (2), mittleren (3) und vorderen Rahmenabschnitt (4), wobei der mittlere und vordere Rahmenabschnitt (3, 4) gegenüber dem in dem Flugzeug-Trolley (12) aufgenommenen hinteren Rahmenabschnitt (2) nach unten versetzt sind und im Übrigen der Rahmen (1) derart bemessen ist, dass der mittlere und vordere Rahmenabschnitt (3, 4) über die Offenseite (15) des Flugzeug-Trolleys (12) überstehen und hierdurch eine Einfüllöffnung (23) eröffnet ist, die außerhalb des Flugzeug-Trolleys (12) angeordnet ist.

## Beschreibung

Die Erfindung betrifft eine Vorrichtung zur Befestigung eines flexiblen Müllaufnahmebehälters in einem Flugzeug-Trolley, wobei dieser Flugzeug-Trolley ein viereckiger Kastenbehälter auf einem fahrbaren Untersatz ist, mit wenigstens drei Begrenzungswänden, nämlich zwei Seitenwänden und einer Rückwand, sowie einer gegebenenfalls verschließbaren Offenseite, wobei die beiden Seitenwände jeweils mit voneinander beabstandet angeordneten horizontalen Führungsleisten versehen sind, die jeweils derart einander gegenüberliegend angeordnet sind, dass auf diesen Führungsleisten beidseits ein Tablett, ebenfalls in horizontaler Ausrichtung, aufstellbar ist, wobei die Vorrichtung aus einem steifen geschlossenen Rahmen besteht, der so bemessen ist, dass dieser Rahmen aus zwei Seitenstreben sowie einem hinteren und einem vorderen Quersteg besteht und dieser Rahmen derart bemessen ist, dass die beiden Seitenstreben, zumindest abschnittsweise, auf die beidseits des Flugzeug-Trolleys angeordneten Führungsstreben auflagerbar sind.

Eine solche Vorrichtung ist etwa aus der WO 2004/106194 A1 vorbekannt. Dabei handelt es sich um ein flexibles Rahmenelement, wobei dieser Rahmen mit einer Klemmvorrichtung zur Aufnahme des die Offenseite eines Müllbeutels umgreifenden Saums versehen ist, sodass der Müllbeutel bestimmungsgemäß mit diesem flexiblen Rahmenelement verbindbar ist. Dabei muss allerdings sichergestellt sein, dass der umlaufende Saum des Müllbeutels in seinen Abmessungen zumindest im Wesentlichen den Abmessungen des Rahmenelementes entspricht, sodass also dieses Rahmenelement nur in Verbindung mit speziellen, für diesen Rahmen ausgelegten Müllbeuteln eingesetzt werden kann. Im Weiteren ist das Rahmenelement so dimensioniert, dass es derart in einen Flugzeug-Trolley einsetzbar ist, dass das Rahmenelement auf den an den Seitenwänden eines Flugzeug-Trolleys in horizontaler Ausrichtung angeordneten Führungsleisten beidseitig aufgelagert werden kann. Hierdurch besteht die Möglichkeit, einen solchen Müllbeutel in einen Flugzeug-Trolley einzusetzen und im Weiteren den Flugzeug-Trolley als fahrbares Transportgefäß zur Müllaufnahme zu verwenden.

Dabei ist allerdings zu beachten, dass der Müllbeutel so weit unten in den Trolley eingesetzt werden muss, dass oberhalb des Rahmenelementes in der Einbaulage im Trolley noch ein hinreichender Eingreifraum verbleibt, um bestimmungsgemäß Müll in den in dem Flugzeug-Trolley eingesetzten Müllbeutel einwerfen zu können. Dies bedeutet, dass sinnvollerweise das Rahmenelement jeweils so tief in den Flugzeug-Trolley eingesetzt werden muss, dass der Abstand zwischen der Einfüllöffnung und der oberen Abdeckung des Flugzeug-Trolleys immer größer ist, als der ungefähre Außenumfang etwa in den Müllbeutel einzubringender Gegenstände. Dies bedeutet aber auch, dass der insoweit benötigte Eingriffsraum oberhalb des Befestigungsrahmens innerhalb des Trolleys freigehalten werden muss, also beispielsweise nicht dazu genutzt werden kann, gleichzeitig abzuräumende Tablette, für die ein solcher Flugzeug-Trolley an sich bestimmungsgemäß ausgelegt ist, in dem Trolley gleichzeitig mit dem Müll zu verstauen. Im Wesentlichen kann die vorbekannte Vorrichtung in Verbindung mit Flugzeug-Trolleys also nur entweder als fahrbares Müllbehältnis oder zum Tabletttransport eingesetzt werden, aber nicht für beide Funktionen gleichzeitig.

In Verbindung mit einem herkömmlichen Mülleimer ist es aus der
WO 01/19705 A1 ebenfalls bekannt, einen Müllbeutel mit einem festen Rahmen zu verbinden und anschließend diesen Müllbeutel in einen Mülleimer einzubringen.

Eine ähnliche Ausgestaltung ist auch aus der GB 2370976 A vorbekannt.

Ausgehend von diesem Stand der Technik liegt der Erfindung die Aufgabe zu Grunde, eine Vorrichtung zur Befestigung eines flexiblen Müllaufnahmebehälters in einem Flugzeug-Trolley zu schaffen, die die vorstehend beschriebenen Nachteile vermeidet, insbesondere eine komfortablere Bedienung ermöglicht und eine bessere Ausnutzung des Stauraums innerhalb eines Flugzeug-Trolleys gewährleistet.

Diese Aufgabe wird durch eine Vorrichtung zur Befestigung eines flexiblen Müllaufnahmebehälters in einem Flugzeug-Trolley gemäß den Merkmalen des geltenden Anspruchs 1 gelöst. Vorteilhafte Ausgestaltungen der Erfindung können den abhängigen Ansprüchen 2 bis 6 entnommen werden.

Im Unterschied zum Stand der Technik schlägt die erfindungsgemäße Lösung die Verwendung eines Rahmens zur Aufnahme bzw. Befestigung eines flexiblen Müllaufnahmebehälters vor, bei der der Rahmen ebenfalls zumindest abschnittsweise auf den seitlichen Führungsleisten eines Flugzeug-Trolleys auflagerbar ist, wobei der Rahmen bei der erfindungsgemäßen Ausführung aber so bemessen ist, dass er einen Überstand über die Offenseite des Flugzeug-Trolleys ausbildet, sodass in dem Bereich vor der Offenseite des Flugzeug-Trolleys eine Einfüllöffnung für in den Müllaufnahmebehälter einzuführenden Müll eröffnet ist. Nachdem gemäß dieser erfindungsgemäßen Lösung der Einfüllbereich für etwa in den Müllaufnahmebehälter einzuführenden Müll nicht innerhalb des Flugzeug-Trolleys angeordnet ist, sondern vielmehr vor dessen Offenseite, ist zunächst der Einfüllraum in keiner Weise durch die Abmessungen des Flugzeug-Trolleys begrenzt. Darüber hinaus kann der Bereich innerhalb des Flugzeug-Trolleys oberhalb des Rahmenelementes zur Verbindung mit dem flexiblen Müllbeutel in seiner eigentlichen Funktion genutzt werden, also beispielsweise zum Abstellen von Tabletts, die oberhalb des Rahmenelementes in die seitlichen Führungsleisten des Flugzeug-Trolleys, unbeschadet der darunter befindlichen Anordnung des Müllaufnahmebehälters, eingeführt werden können. Somit ist es möglich, den Flugzeug-Trolley gleichzeitig in seiner Funktion zur Aufnahme etwa abzuführenden Mülls zu nutzen, wie auch zum Abtransport von Tabletts. Dabei kann die Nutzung des Flugzeug-Trolleys je nach Einschubhöhe des Rahmens zur Befestigung des Müllaufnahmebehälters an die jeweilige Situation vor Ort angepasst werden. So ist es beispielsweise möglich, wenn eher mehr Tabletts abgeräumt werden müssen und weniger Müll entsorgt werden muss, den Rahmen entsprechend tiefer in dem Flugzeug-Trolley anzuordnen, sodass ein größerer Stauraum oberhalb des Rahmens innerhalb des Flugzeug-Trolleys zur Aufnahme von Tabletts zur Verfügung steht, und dementsprechend weniger Raum zur Aufnahme von Müll unterhalb des Rahmens zur Aufnahme des Müllaufnahmebehälters in dem Flugzeug-Trolley.

In vorteilhafter Weiterbildung ist der Rahmen zur Befestigung des Müllaufnahmebehälters beidseitig abgekröpft, sodass der in der Einbaulage des Rahmens über die Offenseite des Flugzeug-Trolleys vorstehende vordere Quersteg gegenüber dem hinteren Quersteg des Rahmens nach unten versetzt angeordnet ist, wobei dies bedeutet, dass die vor der Offenseite des Flugzeug-Trolleys angeordnete Einfüllöffnung des Müllaufnahmebehälters schräg nach unten abknickt und somit vergrößert ist, wobei hierdurch der Müll einfacher in den Müllaufnahmebehälter eingeführt werden kann, weil dies durch die vergrößerte Öffnung erleichtert ist.

In einer weiter verbesserten Ausführung ist der Rahmen nicht nur einfach, sondern zweifach abgekröpft, wobei die über die Offenseite des Trolleys überstehende Öffnung noch weiter eröffnet ist und hierdurch der vorstehend beschriebene Effekt des erleichterten Einführens von Müll in die Öffnung noch weiter verbessert ist.

In konkreter Ausgestaltung ist die etwa auf Höhe der Offenseite des Flugzeug-Trolleys angeordnete Abkröpfung der beiden Seitenstege des Rahmens steiler ausgebildet, als die zweite Abkröpfung, die weiter entfernt von der Offenseite des Flugzeug-Trolleys angeordnet ist, sodass hierdurch die Vergrößerung der Öffnung erreicht wird, aber die eigentliche Einfüllöffnung nicht zu stark schräg angestellt ist, was eine weitere Erleichterung im Zusammenhang mit dem Einführen des Mülls in den Müllaufnahmebehälter darstellt.

In konkreter Ausgestaltung kann das Rahmenelement in einfacher Weise mit dem Müllaufnahmebehälter, etwa einem gewöhnlichen Müllbeutel, derart verbunden werden, dass der die Öffnung des Müllbeutels umschließende obere Saum über die Oberseite des Rahmens gezogen wird, nachdem der Müllbeutel in den von dem Rahmen umgrenzten Bereich eingeführt wurde, und oberhalb des Rahmens über die Außenseite des Rahmens gezogen wird, sodass der Rahmen von dem Saum des Müllaufnahmebehälters übergriffen ist.

Im Weiteren kann dann der insoweit mit dem Müllaufnahmebehälter zunächst provisorisch verbundene Rahmen in den Flugzeug-Trolley derart eingeführt werden, dass ein hinterer Rahmenabschnitt auf den beiden seitlich angeordneten Führungsleisten aufgelagert ist und hierdurch der Müllaufnahmebehälter zwischen den Führungsleisten und den Seitenstegen des hinteren Rahmenabschnitts eingeklemmt und dementsprechend fixiert ist.

Die Erfindung wird nachstehend anhand eines in der Zeichnung nur schematisch dargestellten Ausführungsbeispiels näher erläutert.

Es zeigen:

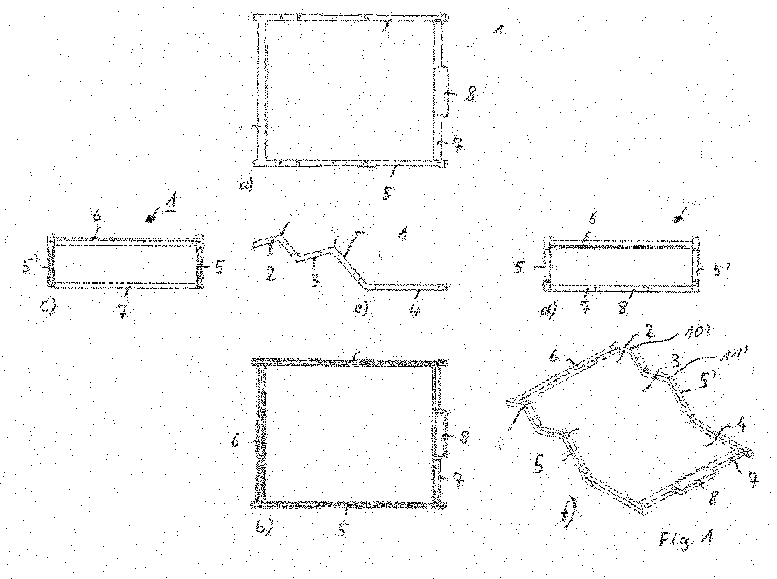

- Figur 1: einen Rahmen in allen Ansichten, nämlich
Figur 1 a) den Rahmen in einer Draufsicht,
Figur 1 b) den Rahmen in einer Ansicht von unten,
Figur 1 c) den Rahmen in einer Ansicht von hinten,
Figur 1 d) den Rahmen in einer Ansicht von vorne,
Figur 1 e) den Rahmen in einer Seitenansicht und
Figur 1 f) den Rahmen in einer perspektivischen Ansicht
- Figur 2: den in Fig. 1 dargestellten Rahmen 1 in Verbindung mit einem Müllaufnahmebehälter in der Einbaulage in einem Flugzeug-Trolley 12 in perspektivischer Ansicht.

Die erfindungsgemäße Vorrichtung zur Befestigung eines flexiblen Müllaufnahmebehälters in einem Flugzeug-Trolley 12 umfasst im Wesentlichen einen Rahmen 1 zur Verbindung mit dem flexiblen Müllaufnahmebehälter, wobei dieser Rahmen 1 in Fig. 1 f) in einer perspektivischen Ansicht dargestellt ist. Dabei besteht der Rahmen 1 aus einem hinteren Rahmenabschnitt 2, einem vorderen Rahmenabschnitt 3 sowie einem zwischen diesen beiden Abschnitten 2, 3 angeordneten mittleren Rahmenabschnitt 4. Dabei wird der Rahmen 1 insgesamt beidseitig von je einem Seitensteg 5, 5' begrenzt. Die beiden Seitenstege 5, 5' sind durch einen hinteren Quersteg 6 und einen vorderen Quersteg 7 miteinander verbunden, sodass der Rahmen 1 insgesamt geschlossen ausgebildet ist.

Dabei sind die Seitenstege 5, 5'jeweils auf gleicher Höhe mittels zweier Abkröpfungen 10, 10' und 11, 11' zweifach abgeknickt, wobei die ersten Abkröpfungen 10, 10' den Übergang von dem hinteren Rahmenabschnitt 2 zu dem mittleren Rahmenabschnitt 3 markieren und die zweiten Abkröpfungen 11, 11' den Übergang von dem mittleren Rahmenabschnitt 3 zu dem vorderen Rahmenabschnitt 4 markieren. In der Ausführung gemäß Fig. 1 sind dabei die einander parallel verlaufenden Seitenstege 5, 5' durch die ersten Abkröpfungen 10, 10' stärker abgeknickt, als durch die zweiten Abkröpfungen 11, 11'. Wie aus der in Figur 1 a) dargestellten Draufsicht hervorgeht, ist der vordere Rahmenabschnitt 4 im Bereich des vorderen Querstegs 7 mit einer mittigen Verbreiterung 8 versehen, die als Griffelement geeignet ist, aber auch den Vorteil besitzt, gegebenenfalls mit einem Aufdruck, etwa einer Markenabbildung, versehen zu werden. Im Übrigen hat diese Verbreiterung 8 den Vorteil, dass auf den ersten Blick erkennbar ist, welcher Teil des Rahmens 1 vorne ist, sodass dann wiederum auch klar ist, wie der Rahmen 1 in einen Flugzeug-Trolley 12 einzuführen ist, nämlich mit dem hinteren Rahmenabschnitt 2.

Figur 1 b) zeigt den in Figur 1 a) dargestellten Rahmen 1 in einer Ansicht von unten.

Die Figuren 1 c) und 1 d) zeigen den Rahmen 1 jeweils in einer Ansicht von hinten sowie in einer Ansicht von vorne.

Die Figur 1 e) zeigt den Rahmen 1 in einer Seitenansicht, wobei aus dieser Seitenansicht hervorgeht, dass der Rahmen 1 in drei Abschnitte, nämlich in einen hinteren Rahmenabschnitt 2, einen mittleren Rahmenabschnitt 3 und einen vorderen Rahmenabschnitt 4 unterteilt ist, wobei der hintere Rahmenabschnitt 2 in einer zumindest aus Figur 1 nicht ersichtlichen Weise derart in die beiden seitlichen Führungsleisten eines Flugzeug-Trolleys 12 eingeschoben wird, dass dieser hintere Rahmenabschnitt 2 in dieser Einbaulage horizontal angeordnet ist.

Figur 1 f) zeigt den Rahmen 1 in einer perspektivischen Ansicht, wobei aus dieser Ansicht ebenfalls die vorstehend erläuterte Anordnung der einzelnen Rahmenabschnitte 2, 3 und 4 hervorgeht, sowie die Lage der beidseitig angeordneten beiden Abkröpfungen 10, 10', 11 und 11'.

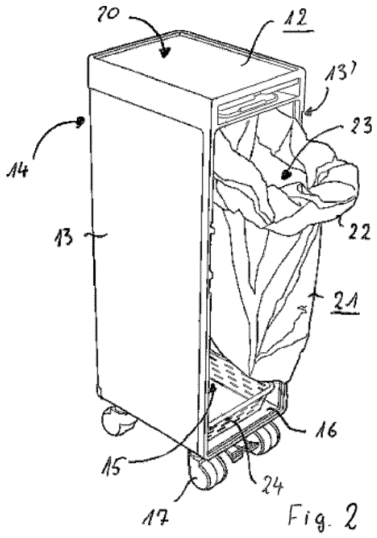

Der Rahmen 1 ist in Figur 2 in seiner Einbaulage in einer perspektivischen Ansicht dargestellt, wobei in dieser perspektivischen Darstellung der in Figur 1 dargestellte Rahmen 1 in einen Flugzeug-Trolley 12 derart eingeschoben ist, dass der hintere Rahmenabschnitt 2 auf die seitlichen Führungsleisten des Flugzeug-Trolleys 12, die in Figur 2 nicht ersichtlich sind, derart aufgelagert ist, dass der hintere Rahmenabschnitt 2 horizontal ausgerichtet ist.

Im Einzelnen ist der Flugzeug-Trolley 12 im Wesentlichen ein viereckiger Kastenbehälter, umfassend zwei einander parallel und hochkant angeordnete Seitenwände 13, 13', die durch eine in Fig. 2 auf Grund der perspektivischen Ansicht nicht ersichtliche Rückwand 14 miteinander verbunden sind, wobei der Flugzeug-Trolley 12 auf der der Rückwand 14 gegenüberliegenden Seite eine gegebenenfalls verschließbare Offenseite 15 aufweist. Unterseitig ist der Flugzeug-Trolley 12 durch eine Bodenplatte 16 abgeschlossen, die von einem fahrbaren Untersatz 17 untergriffen ist. Oberseitig ist der Flugzeug-Trolley 12 mit einer oberen Abdeckung 20 verschlossen.

In der Darstellung gemäß Fig. 2 ist der in Fig. 1 dargestellte Rahmen 1 von einem Müllbeutel 21 übergriffen. Dabei ist der Müllbeutel 21 bestimmungsgemäß durch den Rahmen 1 durchgeführt und der obere Saum 22 des Müllbeutels 21 über die in der Einbaulage ausgebildete Oberkante des Rahmens 1 gezogen, sodass der Müllbeutel 21 in dem Auflagebereich des hinteren Rahmenabschnitts 2 in dem Bereich zwischen dem hinteren Rahmenabschnitt 2 und den seitlichen Führungsleisten des Flugzeug-Trolleys 12, auf denen der hintere Rahmenabschnitt 2 aufgelagert ist, eingeklemmt ist.

Im Weiteren sind auch der mittlere Rahmenabschnitt 2 und der vordere Rahmenabschnitt 4 vom äußeren Saum 22 des Müllbeutels 21 übergriffen, wobei insbesondere der vordere Rahmenabschnitt 4 die Einfüllöffnung 23 des Müllbeutels 21 eröffnet. Dabei ist diese Einfüllöffnung 23 insbesondere dadurch nach unten versetzt, dass mittels der ersten Abkröpfung 10, 10' der mittlere Rahmenabschnitt 3 steil nach unten abgeknickt ist, sodass der nur leicht schräg nach unten abgestellte vordere Rahmenabschnitt 4 gegenüber dem hinteren Rahmenabschnitt 2 deutlich nach unten versetzt ist, mithin die Einfüllöffnung 23 ebenfalls nach unten versetzt ist. Dies hat, wie aus der Darstellung in Fig. 2 ersichtlich, den Vorteil, dass, obgleich in dem Ausführungsbeispiel gemäß Fig. 2 der Rahmen 1 auf den oberen oder obersten seitlichen Führungsleisten des Flugzeug-Trolleys 12 aufgelagert ist, die Einfüllöffnung 23 des Müllbeutels 21 in einer angenehmen Höhe derart angeordnet ist, dass etwa in einem Flugzeug eingesammelter Müll nicht nennenswert nach oben oder unten bewegt werden muss, sondern mehr oder minder auf gleicher Höhe in die Einfüllöffnung 23 des Müllbeutels 21 entsorgt werden kann. Nachdem es insoweit auf Grund der durch die beiden Abkröpfungen 10, 10' und 11, 11' bewirkte Versetzung der Einfüllöffnung 23 nach unten möglich ist, den Müllbeutel 21 im oberen oder obersten Bereich des Flugzeug-Trolleys 12 zu befestigen, verbleibt trotz der Anordnung des Müllbeutels 21 ein Stauraum unterhalb des Müllbeutels 21, sodass in diesem Bereich ebenfalls auf den seitlichen Führungsleisten des Flugzeug-Trolleys 12 weitere Tabletts abgestellt werden können oder andere Aufnahmegefäße 24 in dem Flugzeug-Trolley 12 mitgeführt werden können.

Gemäß der Darstellung in Figur 2 kann der Flugzeug-Trolley 12 in Verbindung mit dem Rahmen 1 also in einer kombinierten Funktion benutzt werden, nämlich um Müll bestimmungsgemäß in dem Müllbeutel 21 zu entsorgen und gleichzeitig Tabletts abzutragen oder Waren oder sonstige Gegenstände in dem Flugzeug-Trolley 12 mitzuführen.

Vorstehend ist somit eine Vorrichtung zur Befestigung eines flexiblen Müllaufnahmebehälters in einem Flugzeug-Trolley 12 beschrieben, die den Vorteil bietet, dass in einem ansonsten vollständig unveränderten Flugzeug-Trolley 12 in einfacher Weise ein Müllbeutel 21 zur Müllentsorgung derart befestigt werden kann, dass der Müllbeutel 21 eine komfortable Einfüllöffnung 23 in einer sinnvollen Einfüllhöhe eröffnet und dennoch der Flugzeug-Trolley 12 gleichzeitig in einer Doppelfunktion, etwa zur Mitnahme von Waren oder zum Abräumen von Tabletts, weiterhin nutzbar bleibt.

### BEZUGSZEICHENLISTE

- 1: Rahmen
- 2: hinterer Rahmenabschnitt
- 3: mittlerer Rahmenabschnitt
- 4: vorderer Rahmenabschnitt
- 5,5': Seitensteg
- 6: hinterer Quersteg
- 7: vorderer Quersteg
- 8: Verbreiterung

- 10, 10': erste Abkröpfung
- 11, 11': zweite Abkröpfung
- 12: Flugzeug-Trolley
- 13, 13': Seitenwand
- 14: Rückwand
- 15: Offenseite
- 16: Bodenplatte
- 17: fahrbarer Untersatz

- 20: obere Abdeckung
- 21: Müllbeutel
- 22: Saum
- 23: Einfüllöffnung
- 24: Aufnahmegefäß

## Patentansprüche

1. Vorrichtung zur Befestigung eines flexiblen Müllaufnahmebehälters in einem Flugzeug-Trolley (12), wobei dieser Flugzeug-Trolley (12) ein viereckiger Kastenbehälter auf einem fahrbaren Untersatz (17) ist, mit wenigstens drei Begrenzungswänden, nämlich zwei Seitenwänden (13, 13') und einer Rückwand (14), sowie einer gegebenenfalls verschließbaren Offenseite (15), wobei die beiden Seitenwände (13, 13') jeweils mit voneinander beabstandet angeordneten horizontalen Führungsleisten versehen sind, die jeweils derart einander gegenüberliegend angeordnet sind, dass auf diesen Führungsleisten beidseits ein Tablett, ebenfalls in horizontaler Ausrichtung, aufstellbar ist, wobei die Vorrichtung aus einem steifen geschlossenen Rahmen (1) besteht, der aus zwei Seitenstegen (5, 5') sowie einem hinteren und einem vorderen Quersteg (6, 7) besteht, und dieser Rahmen (1) derart bemessen ist, dass die beiden Seitenstege (5, 5'), zumindest abschnittsweise, beidseits des Flugzeug-Trolleys (12) auflagerbar sind, **dadurch gekennzeichnet, dass** die Seitenstege (5, 5') derart bemessen sind, dass der Rahmen (1) in der Einbaulage, also vollständig in den Flugzeug-Trolley (12) eingeschoben, einen Überstand über die Offenseite (15) des Flugzeug-Trolleys (12) aufweist.

2. Vorrichtung nach Anspruch 1, **dadurch gekennzeichnet, dass** die Seitenstege (5, 5') des Rahmens (1) jeweils derart beidseitig abgekröpft sind, dass in der Einbaulage der über die Offenseite (15) des Flugzeug-Trolleys (12) vorderseitig vorstehende vordere Quersteg (7) gegenüber dem hinteren Quersteg (6) des Rahmens (1) nach unten versetzt angeordnet ist.

3. Vorrichtung nach Anspruch 2, **dadurch gekennzeichnet, dass** die beiden Seitenstege (5, 5') des Rahmens (1) jeweils zweifach derart abgekröpft sind, dass in der Einbaulage des Rahmens (1) etwa auf Höhe der Offenseite (15) des Flugzeug-Trolleys (12) beidseitig je eine Abkröpfung (10, 10') der beiden Seitenstege (5, 5') des Rahmens (1) nach unten und weiter von der Offenseite (15) des Flugzeug-Trolleys (12) entfernt jeweils eine zweite Abkröpfung (11, 11') der beiden Seitenstege (5, 5') nach unten angeordnet ist.

4. Vorrichtung nach Anspruch 3, **dadurch gekennzeichnet, dass** die erste Abkröpfung (10, 10') steiler gegenüber dem in der Einbaulage waagrecht angeordneten hinteren Rahmenabschnitt (2) des Rahmens (1) abgeknickt ist, als die zweite Abkröpfung (11, 11') gegenüber dem in der Einbaulage waagrecht angeordneten hinteren Rahmenabschnitt (2) des Rahmens (1).

5. Vorrichtung nach einem oder mehreren der vorhergehenden Ansprüche, **dadurch gekennzeichnet, dass** der flexible Müllaufnahmebehälter, vorzugsweise ein Müllbeutel (21), im Bereich seiner von einem flexiblen Saum (22) begrenzten Offenseite derart mit dem Rahmen (1) verbindbar ist, dass der Müllaufnahmebehälter in den Rahmen (1) einführbar ist und dessen Saum (22) über die Oberseite des Rahmens (1) ziehbar ist und dieser Überstand des Müllaufnahmebehälters über die Außenseite des Rahmens (1) klappbar ist, sodass der Rahmen (1) von dem Saum (22) des Müllaufnahmebehälters übergriffen ist.

6. Vorrichtung nach Anspruch 5, **dadurch gekennzeichnet, dass** der Rahmen (1) mit einem den Rahmen (1) oberseitig übergreifenden Saum (22) eines in den Rahmen (1) eingeführten Müllaufnahmebehälters in den Flugzeug-Trolley (12) von der Offenseite (15) des Flugzeug-Trolleys (12) bestimmungsgemäß derart einsetzbar ist, dass der hintere Rahmenabschnitt (2) auf den beidseits angeordneten Führungsleisten des Flugzeug-Trolleys (12) aufliegt und hierdurch der Müllaufnahmebehälter fixiert ist und ein vorderer, nach unten versetzter Rahmenabschnitt (4) über die Offenseite (15) des Flugzeug-Trolleys (12) in dieser Einbaulage übersteht, mithin hierdurch eine Einfüllöffnung (23) des Müllaufnahmebehälters, die über die Offenseite (15) des Flugzeug-Trolleys (12) übersteht, eröffnet ist.
